# EUROPÄISCHE PATENTANMELDUNG

(11) **EP 3 637 591 A1**
(43) Veröffentlichungstag der Anmeldung: **15.04.2020**
(21) Anmeldenummer: 19202359.6
(22) Anmeldetag: 10.10.2019
(51) Int. Cl.: H02K 3/34, H02K 15/10

(54) **VERFAHREN ZUM HERSTELLEN EINER ANORDNUNG MIT EINEM GENUTETEN WICKLUNGSTRÄGER UND EINER SPULENWICKLUNG FÜR EINE ELEKTRISCHE MASCHINE, ANORDNUNG FÜR EINEN STATOR UND EINEN ROTOR FÜR EINE ELEKTRISCHE MASCHINE, STATOR UND ELEKTRISCHE MASCHINE**

(30) Priorität: 12.10.2018 DE 102018125306
(71) Anmelder: Aumann Espelkamp GmbH, 32339 Espelkamp (DE)
(72) Erfinder: DUNKER, Alexander, 32351 Stemwede-Drohne (DE); WEIßE, Lando, 10717 Berlin (DE); LÜTTGE, Wolfgang, 31787 Hameln (DE); SELL-LE BLANC, Florian, 76185 Karlsruhe (DE)
(74) Vertreter: Bittner, Thomas L.

(57) **Zusammenfassung**

Die Erfindung betrifft ein Verfahren zum Herstellen einer Anordnung mit einem genuteten Wicklungsträger und einer Spulenwicklung für eine elektrische Maschine, mit den folgenden Schritten: Bereitstellen eines genuteten Wicklungsträgers (1) und Herstellen einer Spulenwicklung (4) an dem genuteten Wicklungsträger (1), derart, dass Abschnitte der Spulenwicklung (4) in Nuten (2) des genuteten Wicklungsträgers (1) angeordnet und zumindest im Bereich der Nuten (2) mittels einer Isolierung (6) gegenüber dem genuteten Wicklungsträger (1) elektrisch isoliert werden, wobei die Isolierung (6) in den Nuten (2) umlaufend als eine mehrlagige Isolierung hergestellt wird, bei der mehrere getrennte Lagen Isoliermaterial übereinanderliegend angeordnet sind. Ferner wird eine Anordnung mit einem genuteten Wicklungsträger und einer Spulenwicklung für eine elektrische Maschine bereitgestellt. (Fig. 1)

## Beschreibung

Die Erfindung betrifft ein Verfahren zum Herstellen einer Anordnung mit einem genuteten Wicklungsträger und einer Spulenwicklung für eine elektrische Maschine sowie eine solche Anordnung, einen Stator und einen Rotor für eine elektrische Maschine und eine elektrische Maschine.

### Hintergrund

Bei solchen Anordnungen für einen Stator oder einen Rotor einer elektrischen Maschine wird eine Spulenwicklung in Nuten eines genuteten Wicklungsträgers angeordnet. Hierbei sind zumindest die Abschnitte der Spulenwicklung, die in den Nuten angeordnet sind, gegenüber dem genuteten Wicklungsträger elektrisch zu isolieren. Dieses erfolgt mithilfe des Ausbildens einer elektrischen Primär- oder Basisisolation in den Nuten, die auch als Nutisolierung bezeichnet wird. Es sind verschiedene Materialien für das Herstellen einer solchen Isolierung als solche bekannt, beispielsweise Isolierpapier oder Isolierfolie.

### Zusammenfassung

Aufgabe der Erfindung ist es, eine verbesserte Technologie zum Herstellen einer Anordnung mit einem genuteten Wicklungsträger und einer Spulenwicklung für eine elektrische Maschine sowie eine solche Anordnung, einen Stator, einen Rotor und eine elektrische Maschine anzugeben, mit der das Ausbilden der elektrischen Isolierung für die Spulenwicklung und die Montagefähigkeit der Spulenwicklung in den Nuten des Wicklungsträgers verbessert werden kann.

Zur Lösung sind ein Verfahren zum Herstellen einer Anordnung mit einem genuteten Wicklungsträger und einer Spulenwicklung für eine elektrische Maschine sowie eine Anordnung mit einem genuteten Wicklungsträger und einer Spulenwicklung für eine elektrische Maschine nach den unabhängigen Ansprüchen 1 und 10 geschaffen. Weiterhin sind ein Stator und ein Rotor für eine elektrische Maschine sowie eine elektrische Maschine nach den nebengeordneten Ansprüchen 11, 12 und 13 vorgesehen. Ausgestaltungen sind Gegenstand von abhängigen Unteransprüchen.

Nach einem Aspekt ist ein Verfahren zum Herstellen einer Anordnung mit einem genuteten Wicklungsträger und einer Spulenwicklung für eine elektrische Maschine mit den folgenden Schritten geschaffen: Bereitstellen eines genuteten Wicklungsträgers und Herstellen einer Spulenwicklung an dem genuteten Wicklungsträger, derart, dass Abschnitte der Spulenwicklung in Nuten des genuteten Wicklungsträgers angeordnet und zumindest im Bereich der Nuten mittels einer Isolierung gegenüber dem genuteten Wicklungsträger elektrisch isoliert werden. Die Isolierung wird in den Nuten umlaufend als eine mehrlagige Isolierung hergestellt, bei der mehrere getrennte Lagen Isoliermaterial übereinanderliegend angeordnet sind.

Nach einem weiteren Aspekt ist eine Anordnung mit einem genuteten Wicklungsträger und einer Spulenwicklung für eine elektrische Maschine geschaffen, die einen genuteten Wicklungsträger und eine Spulenwicklung an dem genuteten Wicklungsträger aufweist, derart, dass Abschnitte der Spulenwicklung in den Nuten des genuteten Wicklungsträgers angeordnet und zumindest im Bereich der Nuten mittels einer Isolierung gegenüber dem genuteten Wicklungsträger elektrisch isoliert sind. Die Isolierung ist in den Nuten umlaufend eine mehrlagige Isolierung, bei der mehrere getrennte Lagen Isoliermaterial übereinanderliegend angeordnet sind.

Weiterhin sind ein Stator und ein Rotor für eine elektrische Maschine mit einer solchen Anordnung sowie eine elektrische Maschine vorgesehen. Auch ein Transformator mit einer solchen Anordnung mit dem genuteten Wicklungsträger und der Spulenwicklung kann vorgesehen sein.

Das Ausbilden der Isolierung in den Nuten des genuteten Wicklungsträgers umlaufend als mehrlagige Isolierung ermöglicht beim Herstellen eine individuelle Anpassung der elektrischen Isolierung für unterschiedliche Anwendungszwecke, da die Lagen Isoliermaterial der mehrlagigen Isolierung hinsichtlich ihrer Eigenschaften individuell ausgewählt werden können. Auf diese Weise können unterschiedliche mehrlagige Isolierungen zum Beispiel für unterschiedliche Statoren oder Rotoren einer elektrischen Maschine hergestellt werden. Die Nutisolierung kann jeweils zum Beispiel an die Bauart und hiermit verbundene gewünschte Eigenschaften des genuteten Wicklungsträgers angepasst werden.

Die elektrische Isolierung in den Nuten kann über die gesamte Länge der Nut oder nur einen Teil hiervon in gleicher Weise ausgebildet sein, sodass über diesen Bereich dieselbe mehrlagige Isolierung hergestellt ist.

Die mehrlagige Isolierung kann in der jeweiligen Nut umlaufend im Wesentlichen durchgehend oder unterbrochen ausgebildet sein. Auch bei einer unterbrochenen Ausbildung der mehrlagigen Isolierung, sind mehrlagig gebildete Abschnitte der Isolierung in der Nut umlaufend angeordnet. So kann hierbei eine Lage Isoliermaterial umlaufend durchgehend sein, wohin eine weitere Lage Isoliermaterial umlaufend ausgebildet ist, aber nicht durchgehend, sondern zum Beispiel nur in mehreren Abschnitten, die in der Nut umlaufend angeordnet sind.

Ergänzend zu der mehrlagigen Isolierung kann das Einbringen einer Vergussmasse in den Nuten vorgesehen sein, um die elektrische Isolierung weiter auszugestalten.

Der genutete Wicklungsträger kann eine Zylinderform aufweisen. Die Nuten können auf einer Innen- und / oder einer Außenseite des genuteten Wicklungsträgers angeordnet sein.

Der genutete Wicklungsträger kann als ein genutetes Blechpaket ausgeführt sein. Mit dem genuteten Wicklungsträgers kann ein Statorkern oder ein Rotorkern gebildet sein.

Die Formulierung "getrennte Lagen Isoliermaterial" in der hier verwendeten Bedeutung bezieht sich insbesondere auf eine Ausführung, bei der die mehreren Lagen nicht stoffschlüssig miteinander verbunden sind. Bei diesem oder anderen Beispielen kann vorgesehen sein, dass die Lagen der mehrlagigen Nutisolierung lösbar voneinander sind.

Die mehrlagige Isolierung kann mit mindestens einer Lage eines ersten Isoliermaterials und mindestens einer Lage eines zweiten Isoliermaterials, welches vom ersten Isoliermaterial verschieden ist, hergestellt werden. Alternativ können die mehreren Lagen der elektrischen Isolierung in der Nut nur aus genau einer Art von Isoliermaterial hergestellt werden. Insbesondere mittels Kombination verschiedener Isoliermaterialien in den Lagen können an den jeweiligen Anwendungsfall individuell angepasste elektrische Isoliereigenschaften in der Nut bereitgestellt werden. Auch können günstigere Verarbeitungseigenschaften der Komponenten bereitgestellt werden, zum Beispiel bei der Montage.

Zumindest zwei der mehreren Lagen können sich hinsichtlich wenigstens einer Lageneigenschaft aus der folgenden Gruppe unterscheiden: Lagendicke, Werkstoff des Isoliermaterials, spezifischer elektrischer Widerstand, Hochspannungsfestigkeit, Teilentladungsfestigkeit und tribologische Eigenschaften. Werden Lagen mit unterschiedlichen Lageneigenschaften verwendet, können sich zumindest zwei der mehreren Lagen beispielsweise hinsichtlich der Schichtdicke der Lage unterscheiden. Ergänzend oder alternativ können die zumindest zwei Lagen aus unterschiedlichen Werkstoffen bestehen. Isoliermaterialien aus unterschiedlichen Werkstoffen sind als solche in verschiedenen Ausführungsformen bekannt. Ergänzend oder alternativ können sich Lagen der mehrlagigen Isolierung hinsichtlich des jeweils mittels der Lage ausgebildeten elektrischen Widerstands unterscheiden. Andere Eigenschaften können in diesem Zusammenhang die Hochspannungs- und die Teilentladungsfestigkeit, die Medienbeständigkeit, die mechanische Festigkeit oder Elastizität und / oder tribologische Eigenschaften betreffen.

Die mehrlagige Isolierung kann mit mehreren Lagen ein und desselben Isoliermaterials hergestellt werden. Bei dieser Ausführungsform können sich die Lagen hinsichtlich anderer Eigenschaften unterscheiden, auch wenn sie aus ein und demselben Isoliermaterial bestehen. Beispielsweise können die mehreren Lagen aus demselben Material unterschiedliche Lagen- oder Schichtdicken aufweisen.

Mehrere Lagen der mehrlagigen Isolierung können getrennt in den Nuten eingebracht werden. Alternativ kann vorgesehen sein, die mehreren Lagen, sei es ein Teil der Lagen oder alle Lagen der mehrlagigen Isolierung, gemeinsam in den Nuten eingebracht werden. So kann beispielsweise vorgesehen sein, dass die Spulenwicklung zumindest in dem Bereich, welcher dann in den Nuten anzuordnen ist, mit mehreren Lagen aus Isoliermaterial umwickelt wird, sodass diese mehreren Lagen dann gemeinsam in den Nuten eingebracht werden, wenn die Spulenwicklung am genuteten Wicklungsträger angeordnet wird.

In den Nuten kann mindestens eine erste der mehreren Lagen angeordnet werden, bevor die Spulenwicklung in den Nuten eingebracht wird, und mindestens eine zweite der mehreren Lagen kann zusammen mit der Spulenwicklung eingebracht werden. Die zweite der mehreren Lagen kann hierbei vor dem Einbringen der Spulenwicklung in den Nuten hierauf angeordnet werden. Vor dem Einbringen der Spulenwicklung können in den Nuten ein oder mehrere Lagen bereits eingebracht werden. Die wiederholte Montage mehrerer Spulen mit einer weiteren oder mehrerer Lagen kann vorgesehen sein.

Die mehrlagige Isolierung kann mit mindestens einer Lage aus einem Isoliermaterial aus der folgenden Gruppe hergestellt werden: Isolierpapier, Isolierfolie, Isolierlaminat, Beschichtung (Pulverbeschichtung), Umspritzung (Lack, Oxidschicht) und Flächenbauteile, zum Beispiel aus Kunststoff. Isoliermaterialien für die Isolierung von Spulenwicklungen in genuteten Wicklungsträgern sind als solche in verschiedenen Ausführungsformen bekannt, insbesondere in Form verschiedener Isolierpapiere und verschiedener Isolierfolien. , Isolierlaminate, Beschichtung (Pulverbeschichtung) oder Umspritzung (Lack, Oxidschicht), Flächenbauteile (Bspw. aus Kunststoff).

Bei dem genuteten Wicklungsträger kann eine seitliche Nutöffnung der Nuten frei von einer die Nutöffnung zumindest teilweise verschließenden und elektrisch isolierenden Abdeckung ausgebildet werden. Die hier vorgeschlagene Ausführung der elektrischen Isolierung in den Nuten des genuteten Wicklungsträgers ermöglicht es, auf die elektrisch isolierende Abdeckung der seitlichen Nutöffnung, die für innengenutete Wicklungsträger oder Blechpakete radial innenliegend vorgesehen sein kann, einzusparen. Alternativ kann ergänzend eine solche Abdeckung der Nutöffnung vorgesehen sein.

Bei der mehrlagigen Isolierung können die mehreren getrennten Lagen untereinander nicht haftend ausgebildet werden. Insbesondere bei dieser oder anderen Ausführungsformen sind die mehreren Lagen der mehrlagigen Isolierung in den Nuten lösbar übereinanderliegend angeordnet. Alternativ können die Lagen aneinander haften, aber lösbar oder trennbar voneinander sein.

Im Zusammenhang mit der Anordnung für den genuteten Wicklungsträger für eine elektrische Maschine können die vorangehend in Verbindung mit dem Verfahren zum Herstellen erläuterten Ausgestaltungen entsprechend vorgesehen sein. Dieses gilt für den Stator und den Rotor für eine elektrische Maschine sowie die elektrische Maschine *mutatis mutandis.*

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung eines Abschnitts eines genuteten Wicklungsträgers mit Nuten in Draufsicht und
- Fig. 2: eine schematische Darstellung einer Nut des Abschnitts aus Fig. 1 vor dem Einbringen einer Spulenwicklung.

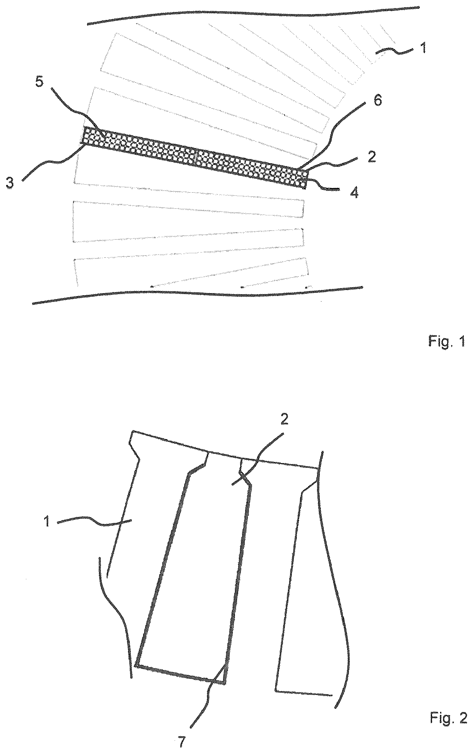

Fig. 1 zeigt eine schematische Darstellung eines Abschnitts eines genuteten Wicklungsträgers 1, welcher als Statorkern oder Rotorkern ausgeführt sein kann, mit mehreren Nuten 2. In einer Nut 3 der Nuten 2 ist ein Abschnitt einer Spulenwicklung 4 angeordnet, derart, dass in der Nut 4 aufgenommenen Abschnitte 5 der Spulenwicklung 5 umlaufend von einer elektrischen Isolierung 6 umgeben und so gegenüber dem genuteten Wicklungsträger 1 elektrisch isoliert sind. Die elektrische Isolierung 6 ist mehrlagig ausgeführt, derart, dass mehrere Lagen Isoliermaterial übereinanderliegend angeordnet sind und so in der Nut 3 gemeinsam die elektrische Isolierung der Spulenwicklung 4 gegenüber dem genuteten Wicklungsträger 1 ausbilden, also eine Nutisolierung.

Die mehreren Lagen Isoliermaterial können beim Herstellen der Anordnung mit dem genuteten Wicklungsträger 1 und der Spulenwicklung 4 gemeinsam oder nacheinander in der Nut 3 eingebracht werden. So kann vorgesehen sein, sämtliche Lagen Isoliermaterial um die in der Nut 3 anzuordnenden Abschnitte 5 der Spulenwicklung 4 zu wickeln, bevor die Spulenwicklung 4 in der Nut 3 eingebracht wird.

Alternativ kann vorgesehen sein, vor dem Einbringen der Spulenwicklung 4 in der Nut 3 bereits wenigstens eine Lage 7 in der Nut 3 anzuordnen, wie dies Fig. 2 schematisch zeigt. Die vor dem Einbringen der Spulenwicklung 4 in der Nut 3 angeordnete Isolierlage 7 kann dann hinsichtlich der Materialeigenschaften so ausgewählt werden, dass sich die Isolierlage 7 gut an die Innenform der Nut 3 anpasst. Ein solches Beispiel zeigt Fig. 2. Weitere Lagen können dann um die Spulenwicklung 4 gewickelt werden, bevor diese in der Nut 3 eingebracht wird, sodass schließlich die mehrlagige elektrische Nutisolierung hergestellt wird.

Das Vorsehen der mehrlagigen Isolierung ermöglicht eine individuelle Anpassung der elektrischen Nutisolierung an unterschiedliche Anwendungsfälle. Es kann eine Vorbestückung des genuteten Wicklungsträgers 1 mit mindestens einer ersten Isolierlage erfolgen, indem diese schon in den Nuten 2 des genuteten Wicklungsträgers 1 eingebracht wird, bevor dann hier die Spulenwicklung 4 angeordnet wird. Der Wickel- und Montageprozess für die Vorbereitung der Spulen kann mit einem dünnen Isolierpapier ausgeführt werden. Die gesamte elektrische Isolierung wird dann in der Nut 2 hergestellt und von dem dort bereits befindlichen Isoliermaterial auf der Spulenwicklung 4 gebildet.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen einer Anordnung mit einem genuteten Wicklungsträger und einer Spulenwicklung für eine elektrische Maschine, mit den folgenden Schritten:
- Bereitstellen eines genuteten Wicklungsträgers (1) und
- Herstellen einer Spulenwicklung (4) an dem genuteten Wicklungsträger (1), derart, dass Abschnitte der Spulenwicklung (4) in Nuten (2) des genuteten Wicklungsträgers (1) angeordnet und zumindest im Bereich der Nuten (2) mittels einer Isolierung (6) gegenüber dem genuteten Wicklungsträger (1) elektrisch isoliert werden,
wobei die Isolierung (6) in den Nuten (2) umlaufend als eine mehrlagige Isolierung hergestellt wird, bei der mehrere getrennte Lagen Isoliermaterial übereinanderliegend angeordnet sind.

2. Verfahren nach Anspruch 1, **dadurch gekennzeichnet, dass** die mehrlagige Isolierung (6) mit mindestens einer Lage eines ersten Isoliermaterials und mindestens einer Lage eines zweiten Isoliermaterials, welches vom ersten Isoliermaterial verschieden ist, hergestellt wird.

3. Verfahren nach Anspruch 1 oder 2, **dadurch gekennzeichnet, dass** sich zumindest zwei der mehreren Lagen hinsichtlich wenigstens einer Lageneigenschaft aus der folgenden Gruppe unterscheiden: Lagendicke, Werkstoff des Isoliermaterials und spezifischer elektrischer Widerstand.

4. Verfahren nach mindestens einem der vorangehenden Ansprüche, **dadurch gekennzeichnet, dass** die mehrlagige Isolierung mit mehreren Lagen ein und desselben Isoliermaterials hergestellt wird.

5. Verfahren nach mindestens einem der vorangehenden Ansprüche, **dadurch gekennzeichnet, dass** mehrere Lagen der mehrlagige Isolierung getrennt in den Nuten (2) eingebracht werden.

6. Verfahren nach Anspruch 5, **dadurch gekennzeichnet, dass** in den Nuten (2) mindestens eine erste der mehreren Lagen angeordnet wird, bevor die Spulenwicklung (4) in den Nuten (2) eingebracht wird, und mindestens eine zweite der mehreren Lagen zusammen mit der Spulenwicklung (4) eingebracht wird.

7. Verfahren nach mindestens einem der vorangehenden Ansprüche, **dadurch gekennzeichnet, dass** die mehrlagige Isolierung mit mindestens einer Lage aus einem Isoliermaterial aus der folgenden Gruppe hergestellt wird: Isolierpapier, Isolierfolie, Isolierlaminat, Beschichtung, Umspritzung und Flächenbauteile.

8. Verfahren nach mindestens einem der vorangehenden Ansprüche, **dadurch gekennzeichnet, dass** beim dem genuteten Wicklungsträger (1) eine seitliche Nutöffnung der Nuten (2) frei von einer die Nutöffnung zumindest teilweise verschließenden und elektrisch isolierenden Abdeckung ausgebildet wird.

9. Verfahren nach mindestens einem der vorangehenden Ansprüche, **dadurch gekennzeichnet, dass** bei der mehrlagigen Isolierung die mehreren getrennten Lagen untereinander nicht haftend ausgebildet werden.

10. Anordnung mit einem genuteten Wicklungsträger und einer Spulenwicklung für eine elektrische Maschine, mit
- einem genuteten Wicklungsträger (1) und
- einer Spulenwicklung (4) an dem genuteten Wicklungsträger (1), derart, dass Abschnitte (5) der Spulenwicklung (4) in Nuten (2) des genuteten Wicklungsträgers (1) angeordnet und zumindest im Bereich der Nuten (2) mittels einer Isolierung (6) gegenüber dem genuteten Wicklungsträger (1) elektrisch isoliert sind,
wobei die Isolierung (6) in den Nuten (2) umlaufend eine mehrlagige Isolierung ist, bei der mehrere getrennte Lagen Isoliermaterial übereinanderliegend angeordnet sind.

11. Stator für eine elektrische Maschine, mit einer Anordnung nach Anspruch 10.

12. Rotor für eine elektrische Maschine, mit einer Anordnung nach Anspruch 10.

13. Elektrische Maschine, mit einem Stator nach Anspruch 11 oder einem Rotor nach Anspruch 12.
